# EUROPÄISCHE PATENTANMELDUNG

(11) **EP 4 835 452 A1**
(43) Veröffentlichungstag der Anmeldung: **04.11.2026**
(21) Anmeldenummer: 26162015.7
(22) Anmeldetag: 03.03.2026
(51) Int. Cl.: G01N 21/88

(54) **BELEUCHTUNGSEINRICHTUNG FÜR EINE INSPEKTIONSMASCHINE ZUM INSPIZIEREN VON VERPACKUNGEN UND/ODER PRODUKTEN**

(30) Priorität: 30.04.2025 DE 102025116757; 06.10.2025 DE 102025140603
(71) Anmelder: MULTIVAC Marking & Inspection GmbH & Co. KG, 32130 Enger (DE)
(72) Erfinder: ISAAK, Dennis, 32130 Enger (DE); SIEKMANN, Daniel, 32130 Enger (DE)
(74) Vertreter: Grünecker Patent- und Rechtsanwälte PartG mbB

(57) **Zusammenfassung**

Beleuchtungseinrichtung für eine Inspektionsmaschine zum Inspizieren von Verpackungen und/oder Produkten, die Beleuchtungseinrichtung umfassend eine Vielzahl gleichartiger Lichtquellen zum Emittieren von Infrarotlicht in eine Emissionsrichtung und einen Diffusor zum Erzeugen eines überlappenden Lichtmusters aus dem emittierten Infrarotlicht, das auf eine zu inspizierende Verpackung und/oder ein zu inspizierendes Produkt gerichtet werden kann.

## Beschreibung

Die vorliegende Erfindung betrifft eine Beleuchtungseinrichtung für eine Inspektionsmaschine zum Inspizieren von Verpackungen und/oder Produkten gemäß Anspruch 1 sowie eine Inspektionseinrichtung zum Inspizieren von Verpackungen und/oder Produkten gemäß Anspruch 10 und ein Verfahren zum Inspizieren von Verpackungen und/oder Produkten mittels einer Inspektionseinrichtung gemäß Anspruch 14.

### Stand der Technik

Beleuchtungseinrichtungen für Inspektionseinrichtungen zum Inspizieren von Verpackungen und/oder Produkten sind aus dem Stand der Technik grundsätzlich bekannt. Diese umfassen üblicherweise eine Lichtquelle, die die Verpackung in Auflicht oder Durchlicht beleuchtet. Das von der Verpackung reflektierte oder transmittierte Licht kann dann von einer geeigneten Detektionseinrichtung wie beispielsweise einer Kamera detektiert werden.

Aus der DE 10202050 A1 ist eine Vorrichtung zur optischen Bildgebung im Bereich der Kleintieruntersuchung bekannt. Diese Vorrichtung umfasst eine Vielzahl von in unterschiedlichen Wellenlängenbereichen emittierenden Lichtquellen, die durch einen geeigneten Filter einzeln genutzt werden können, um das zu untersuchende Tier mit einer ausgewählten Wellenlänge zu bestrahlen.

Grundlegend ist jedoch bei solchen Beleuchtungseinrichtungen stets problematisch, dass eine möglichst vollständige und gleichmäßige Ausleuchtung des zu inspizierenden Bereichs nur schwierig realisiert werden kann.

### Aufgabe

Ausgehend vom bekannten Stand der Technik besteht die zu lösende technische Aufgabe somit darin, eine Beleuchtungseinrichtung für eine Inspektionseinrichtung zum Inspizieren von Verpackungen und/oder Produkten sowie eine entsprechende Inspektionseinrichtung und ein Verfahren zum Inspizieren von Verpackungen und/oder Produkten anzugeben, mit denen eine möglichst vollständige Belichtung des zu inspizierenden Bereichs kostengünstig erreicht werden kann.

### Lösung

Diese Aufgabe wird durch die Beleuchtungseinrichtung für eine Inspektionseinrichtung zum Inspizieren von Verpackungen und/oder Produkten gemäß Anspruch 1 sowie die Inspektionseinrichtung zum Inspizieren von Verpackungen und/oder Produkten gemäß Anspruch 10 und das Verfahren zum Inspizieren von Verpackungen und/oder Produkten mittels einer Inspektionseinrichtung gemäß Anspruch 14 gelöst. Vorteilhafte Weiterbildungen der Erfindung sind in den Unteransprüchen erfasst.

Erfindungsgemäß ist eine Beleuchtungseinrichtung für eine Inspektionsmaschine zum Inspizieren von Verpackungen und/oder Produkten, die Beleuchtungseinrichtung umfassend eine Vielzahl gleichartiger Lichtquellen zum Emittieren von Infrarotlicht in eine Emissionsrichtung und einen Diffusor zum Erzeugen eines überlappenden Lichtmusters aus dem emittierten Infrarotlicht, das auf eine zu inspizierende Verpackung und/oder ein zu inspizierendes Produkt gerichtet werden kann.

Unter den Verpackungen können leere, aber auch mit einem Produkt (beispielsweise Wurst oder Käsescheiben) gefüllte Verpackungen verstanden werden. Die Verpackung muss in diesem Sinne auch keine vollständige oder fertig verschlossene Verpackung sein, sondern kann auch lediglich ein Teil einer gesamten Verpackung (beispielsweise eine Verpackungsmulde oder eine Siegelfolie) sein. Das Inspizieren einer gefüllten Verpackung kann im Sinne der Erfindung umfassen, dass zum einen die Verpackung (also das Material der Verpackung) selbst inspiziert werden kann und/oder das in die Verpackung eingefüllte Produkt (durch das Verpackungsmaterial hindurch) inspiziert werden kann. Das Inspizieren eines Produktes kann umfassen, dass das Produkt selbst unabhängig von einer Verpackung inspiziert wird (beispielsweise während es zu einer Einlegeeinrichtung transportiert wird, um in eine Verpackung eingelegt zu werden) oder dass das Produkt inspiziert wird, während es in einer nicht verschlossenen Verpackung positioniert ist. Die Beleuchtungseinrichtung ist erfindungsgemäß geeignet, zum Inspizieren sämtlicher dieser Anordnungen von Verpackung und Produkt verwendet zu werden.

Soweit im Folgenden nicht anders angegeben, bezieht sich eine Erwähnung von Verpackungen stets auf Verpackungen mit oder ohne Produkt entsprechend obiger Beschreibung und soll auch Produkte ohne Verpackungen mit einschließen.

Unter den gleichartigen Lichtquellen sind dabei Lichtquellen zu verstehen, die Licht mit im Wesentlichen identischem Spektrum emittieren. Handelt es sich bei den Lichtquellen beispielsweise um Infrarot-LEDs, emittieren diese infrarotes Licht in einem im Wesentlichen identischen Wellenlängenbereich, wobei die Peak-Wellenlänge der Wellenlängenbereiche sich um höchstens 5nm oder um bis zu höchstens 10nm oder bis zu höchstens 30nm oder bis zu höchstens 50nm unterscheidet. Sind die Lichtquellen keine LEDs bzw. andere schmalbandig emittierende Lichtquellen, so ist der von den Lichtquellen emittierte Wellenlängenbereich dennoch entsprechend identisch und unterscheidet sich an seiner unteren oder oberen Grenze um höchstens 2% oder um höchstens 3% oder um höchstens 5% des emittierten Wellenlängenbereiches (also bei einem Wellenlängenbereich von beispielsweise 1000nm um höchstens 20nm, 30nm oder 50nm).

Die Lichtquellen sind hinsichtlich ihres insgesamt emittierten Spektrums nicht beschränkt. Es ist erfindungsgemäß lediglich erforderlich, dass die Lichtquellen auch infrarotes Licht emittieren. Die Erfindung umfasst somit nicht nur Lichtquellen, deren Emissionsspektrum ausschließlich im infraroten Bereich liegt, sondern auch Lichtquellen, die zusätzlich in anderen Wellenlängenbereichen, etwa im sichtbaren Bereich, Licht emittieren. Es kann, muss jedoch nicht vorgesehen sein, dass das Emissionsmaximum der Lichtquellen im infraroten Bereich liegt.

Besonders bevorzugt ist vorgesehen, dass die Lichtquellen Infrarotlicht mit einer Wellenlänge von 750nm bis 3000nm, besonders bevorzugt 1000nm bis 2000nm emittieren können. Da Fehlstellen von Verpackungen häufig mit in diesem Bereich austretendem Produkt oder vorhandener Flüssigkeit, die beispielsweise ein korrektes Siegeln der Verpackungen verhindert hat, einhergehen können, kann insbesondere vorgesehen sein, dass die Lichtquellen infrarotes Licht mit einer Wellenlänge emittieren können, die einem Absorptionsmaximum von Wasser entspricht, also insbesondere zwischen 1300nm und 1600nm, besonders bevorzugt zwischen 1400 und 1600nm, insbesondere 1500 bis 1580nm.

Ein überlappendes Lichtmuster ist insbesondere als ein solches Lichtmuster zu verstehen, das in einer Ebene senkrecht zur Emissionsrichtung, die nach dem Diffusor angeordnet ist, die Lichtintensität in einem Bereich, der einer Projektion des Bereichs, der durch die Lichtquellen abgedeckt wird, auf die Ebene entspricht, um bis zu höchstens 5% oder um bis zu höchstens 10% oder um bis zu höchstens 20% schwankt. Die Lichtintensität ist also in dieser Ebene im Wesentlichen konstant.

Durch Erzeugen eines großflächigen, diffusen, aber gleichmäßigen überlappenden Lichtmusters kann erreicht werden, dass das Infrarotlicht, das zum Inspizieren der Verpackung genutzt wird, die Verpackung bzw. zumindest den zu inspizierenden Teil der Verpackung möglichst gleichmäßig ausleuchtet. Durch die Verwendung des Diffusors in Kombination mit einer Vielzahl gleichartiger Lichtquellen kann dabei die Komplexität der Einrichtung reduziert werden, da diese einfach an das zu erreichende, fokussierende Infrarotlicht bzw. dessen räumliche Verteilung angepasst werden können. Dabei ist die Verwendung von Infrarotlicht für die Inspektion von Verpackungen und/oder Produkten besonders vorteilhaft, da dies die Möglichkeit schafft, Teile von Verpackungen und/oder Produkten auch durch für sichtbares Licht intransparente Bereiche (etwa Aufdrucke auf Verpackungen oder Etiketten auf Verpackungen oder Markierungen auf Produkten) hindurch zu inspizieren.

Es kann vorgesehen sein, dass die Beleuchtungseinrichtung eine in Emissionsrichtung nach dem Diffusor angeordnete Fokussiereinrichtung zum Erzeugen von fokussiertem Infrarotlicht, das auf eine zu inspizierende Verpackung und/oder ein zu inspizierendes Produkt gerichtet werden kann, umfasst.

Die Fokussiereinrichtung kann beispielsweise als Linse oder ähnliches ausgebildet sein und so strukturiert sein, dass das Infrarotlicht in Form eines bestimmten Musters (beispielsweise einer Linie oder eines Kreises oder eines Rechtecks oder ähnlichem) fokussiert wird. Hiermit kann das Infrarotlicht gezielt auf einen bestimmten Teil einer Verpackung fokussiert werden, um diesen Teil zu inspizieren, was das Inspektionsergebnis verbessern kann.

Es kann vorgesehen sein, dass die Lichtquellen in einem eindimensionalen oder zweidimensionalen Muster angeordnet sind.

Das eindimensionale Muster kann beispielsweise eine Linie oder ein Kreis oder eine Ellipse sein, entlang deren Rand die Lichtquellen angeordnet sein können. Ein zweidimensionales Muster kann beispielsweise ein Rechteck oder ein Kreis oder eine Ellipse sein, in der die Lichtquellen über die gesamte Fläche verteilt sein können. Die Lichtquellen können dabei in regelmäßigen Abständen innerhalb des Musters angeordnet sein, wobei insbesondere bei einem zweidimensionalen Muster der Abstand in einer ersten Richtung von einem Abstand in einer dazu senkrechten zweiten Richtung entlang des Musters nicht identisch sein muss. Hierdurch kann durch die Anordnung der Lichtquellen bereits grundsätzlich die Lichtverteilung des Lichtes, das in Richtung der Verpackung und/oder des Produkts emittiert wird, vorgegeben werden, was eine zuverlässige Ausleuchtung eines zu inspizierenden Bereichs einer Verpackung ermöglicht.

Das eindimensionale Muster oder das zweidimensionale Muster kann ein regelmäßiges Muster sein. Ein regelmäßiges Muster ist in diesem Sinne als ein solches Muster zu verstehen, in dem benachbarte Lichtquellen jeweils denselben Abstand zueinander aufweisen. Hierdurch wird der Diffusor im Wesentlichen gleichmäßig beleuchtet, was die Erzeugung eines hinsichtlich der Intensitätsverteilung möglichst konstanten Lichtmusters ermöglicht.

In einer Ausführungsform ist vorgesehen, dass die Lichtquellen Breitbandlichtquellen oder Schmalbandlichtquellen sind. Breitbandlichtquellen sind als solche Lichtquellen zu verstehen, die ein im Wesentlichen kontinuierliches Spektrum emittieren (beispielsweise Halogenlampen oder ähnliches). Schmalbandlichtquellen sind insbesondere solche Lichtquellen, die Licht nur in einem vorgegebenen, begrenzten Wellenlängenbereich emittieren. Hierzu zählen beispielsweise Laserdioden. Die Verwendung von Breitbandlichtquellen kann günstig realisiert werden und kann überdies ermöglichen, die Verpackungen und/oder Produkte in einem weiten Wellenlängenspektrum zu inspizieren (beispielsweise nicht nur im Infrarotlicht, sondern zusätzlich im sichtbaren Licht). Die Verwendung von Schmalbandlichtquellen ist besonders vorteilhaft, wenn diese auf bestimmte für das Inspizieren besonders geeignete Wellenlängen abgestimmt sind, wie beispielsweise Schmalbandlichtquellen, die Licht im Bereich eines Absorptionsmaximums von Wasser emittieren können. Hierdurch kann das Inspektionsergebnis verbessert werden.

Es kann vorgesehen sein, dass die Beleuchtungseinrichtung einen für Infrarotlicht wenigstens einer Wellenlänge transparenten Spektralfilter in Emissionsrichtung umfasst oder dass der Diffusor ein für Infrarotlicht wenigstens einer Wellenlänge transparenter Diffusor ist. Durch diese Ausführungsformen können insbesondere Bereiche des Emissionsspektrums von Breitbandlichtquellen gefiltert werden, um eine Beeinträchtigung durch Streulicht von unerwünschten Wellenlängen beim Inspizieren zu vermeiden.

Die Beleuchtungseinrichtung kann ein Anzeigeelement zum Anzeigen eines Betriebszustands der Beleuchtungseinrichtung umfassen. Das Anzeigeelement kann beispielsweise in Form einer oder mehrerer Statusleuchten, wie beispielsweise Status-LEDs, die in verschiedenen Farben abhängig vom Betriebszustand der Beleuchtungseinrichtung Licht emittieren können, ausgeführt sein. Beispielsweise können eine oder mehrere rote LEDs vorgesehen sein, um anzuzeigen, dass der Betrieb der Beleuchtungseinrichtung nicht oder nur eingeschränkt möglich ist. Eine oder mehrere grüne LEDs können vorgesehen sein, um anzuzeigen, dass der Betrieb der Beleuchtungseinrichtung ordnungsgemäß funktioniert. Hierdurch kann auf für den Bediener einfache Weise eine Möglichkeit angegeben werden, um die Funktionsfähigkeit der Beleuchtungseinrichtung zu prüfen, was die Zuverlässigkeit beim Inspizieren von Verpackungen verbessern kann.

In einer Ausführungsform ist vorgesehen, dass die Beleuchtungseinrichtung eine Kühleinrichtung zum Kühlen von wenigstens einem von den Lichtquellen, dem Diffusor, der Fokussiereinrichtung umfasst.

Die Kühleinrichtung kann beispielsweise eine Luftkühlung oder eine Wasserkühlung umfassen und über einen oder mehrere Wärmetauscher mit der Beleuchtungseinrichtung und/oder dem Diffusor und/oder der Fokussiereinrichtung verbunden sein, um ein Abführen von Wärme im Betrieb der Beleuchtungseinrichtung zu ermöglichen. Hierdurch kann sichergestellt werden, dass die Beleuchtungseinrichtung oder ihre Komponenten nicht wegen Überhitzung ausfällt oder insbesondere ein Lichtspektrum von schmalbandigen Lichtquellen durch zu hohe Temperaturen negativ beeinflusst wird, was die Zuverlässigkeit beim Inspizieren von Verpackungen verbessern kann.

In einer Ausführungsform ist vorgesehen, dass die Lichtquellen ausgebildet sind, Infrarotlicht in einem Wellenlängenbereich zu emittieren und dass der Diffusor für Infrarotlicht in wenigstens dem Wellenlängenbereich transparent ist. Im Sinne dieser Ausführungsform kann unter dem Begriff "transparent" verstanden werden, dass der Transmissionsgrad des Infrarotlichts in dem betreffenden Wellenlängenbereich wenigstens 80%, bevorzugt wenigstens 90%, besonders bevorzugt wenigstens 95% beträgt. Hierdurch wird sichergestellt, dass die Lichtausbeute bezüglich des Teils des von den Lichtquellen emittierten Spektrums, das für die Inspektion verwendet werden soll, möglichst hoch ist und gleichzeitig die thermische Belastung des Diffusors vermindert.

Erfindungsgemäß ist weiterhin eine Inspektionseinrichtung zum Inspizieren von Verpackungen und/oder Produkten vorgesehen, die Inspektionseinrichtung umfassend eine Beleuchtungseinrichtung nach einer der vorangehend beschriebenen Ausführungsformen, eine Platzierungseinrichtung zum Platzieren einer zu inspizierenden Verpackung und/oder eines zu inspizierenden Produkts, eine Detektionseinrichtung zum Detektieren wenigstens eines Teils der Verpackung und/oder des Produkts in Durchlicht oder Auflicht des von der Beleuchtungseinrichtung emittierten Lichts, und eine Auswerteinrichtung zum Auswerten des eines von der Detektionseinrichtung erlangten Detektionsergebnisses.

Mit dieser Inspektionseinrichtung kann auf zuverlässige Weise ein Inspizieren von Verpackungen und/oder Produkten ermöglicht werden.

Es kann vorgesehen sein, dass die Beleuchtungseinrichtung weiterhin eine Fokussiereinrichtung in Emissionsrichtung nach dem Diffusor umfasst und wobei optional die Platzierungseinrichtung relativ zu der Beleuchtungseinrichtung so angeordnet ist, dass zumindest der Teil der platzierten Verpackung und/oder des platzierten Produkts im Fokus der Fokussiereinrichtung platziert ist. Die Fokussiereinrichtung erlaubt das Inspizieren von Verpackungen und/oder Produkten mit hoher Lichtausbeute, was eine Erkennung von Fehlstellen verbessert.

Die Detektionseinrichtung kann eine Infrarotdetektionseinrichtung umfassen, insbesondere eine Infrarot-Zeilenkamera. Diese Ausgestaltung der Detektionseinrichtung ist besonders vorteilhaft, um Fehlstellen in Verpackungen und/oder Produkten zu erkennen.

Es kann vorgesehen sein, dass die Platzierungseinrichtung eine Transporteinrichtung zum Transportieren einer zu inspizierenden Verpackung und/oder eines zu inspizierenden Produkts umfasst. Ist die Platzierungseinrichtung als Transporteinrichtung ausgebildet, so erlaubt dies ein kontinuierliches Inspizieren der Verpackungen und/oder Produkte in einer integrierten Anlage, was den Durchsatz verbessern kann.

Erfindungsgemäß ist weiterhin ein Verfahren zum Inspizieren von Verpackungen und/oder Produkten mittels einer Inspektionseinrichtung vorgesehen, die Inspektionseinrichtung umfassend eine Beleuchtungseinrichtung nach einer der vorangehend beschriebenen Ausführungsformen, eine Platzierungseinrichtung zum Platzieren einer zu inspizierenden Verpackung und/oder eines zu inspizierenden Produkts, eine Detektionseinrichtung zum Detektieren wenigstens eines Teils der Verpackung und/oder des Produkts in Durchlicht oder Auflicht des von der Beleuchtungseinrichtung emittierten Lichts, und eine Auswerteinrichtung zum Auswerten des eines von der Detektionseinrichtung erlangten Detektionsergebnisses, wobei das Verfahren ein Platzieren einer zu inspizierenden Verpackung und/oder eines zu inspizierenden Produkts, ein Beleuchten der zu inspizierenden Verpackung und/oder des zu inspizierenden Produkts mittels der Beleuchtungseinrichtung, ein Detektieren zumindest eines Teils der Verpackung und/oder des Produkts und ein Auswerten des von der Detektionseinrichtung erlangten Detektionsergebnisses mittels der Auswerteinrichtung umfasst. Dieses Verfahren gewährleistet ein zuverlässiges Inspizieren von Verpackungen und/oder Produkten.

Es kann vorgesehen sein, dass die Platzierungseinrichtung eine Transporteinrichtung zum Transportieren einer zu inspizierenden Verpackung und/oder eines zu inspizierenden Produkts umfasst und dass das Verfahren ein Platzieren der Verpackung und/oder des Produkts mittels der Transporteinrichtung umfasst, wobei optional das Verfahren ein Detektieren des wenigstens einen Teils der Verpackung und/oder des Produkts während des Transports der Verpackung und/oder des Produkts mittels der Transporteinrichtung umfasst.

Hiermit kann der Durchsatz bei der Behandlung und der weiteren Verarbeitung von Verpackungen und/oder Produkten, insbesondere stromab der Detektion, erhöht werden.

### Kurze Beschreibung der Figuren

- Figur 1: zeigt eine schematische Ansicht einer Beleuchtungseinrichtung gemäß einer Ausführungsform;
- Figur 2: zeigt eine schematische Ansicht einer Beleuchtungseinrichtung gemäß einer Ausführungsform sowie die Intensitätsverteilung von Licht an bestimmten Stellen in Emissionsrichtung;
- Figur 3: zeigt eine Ausführungsform einer Inspektionseinrichtung.

### Ausführliche Beschreibung

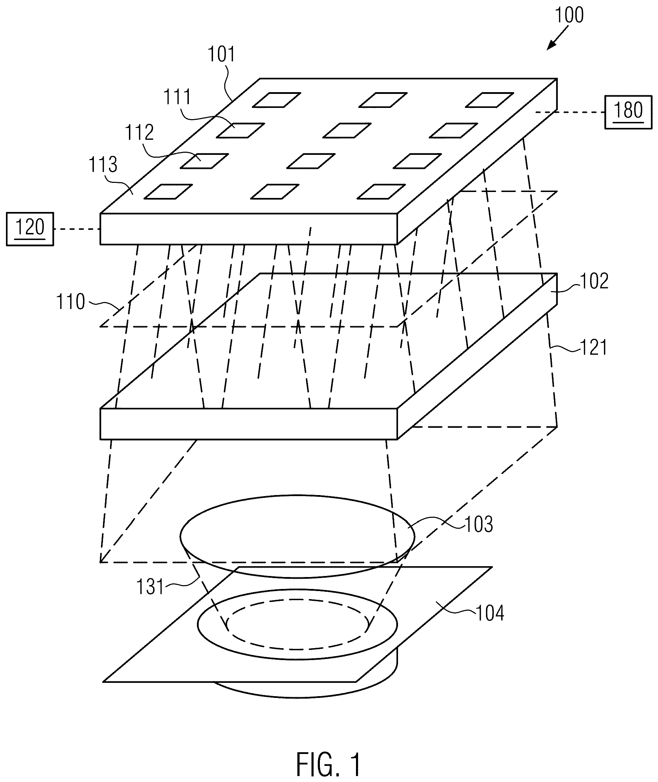

Figur 1 zeigt eine Beleuchtungseinrichtung 100 gemäß einer Ausführungsform.

Die Beleuchtungseinrichtung ist insbesondere als Beleuchtungseinrichtung vorgesehen, die zum Inspizieren von Verpackungen und/oder Produkten 104, insbesondere zum Erkennen von Fehlstellen von Verpackungen und/oder Produkten, genutzt werden kann. Zu diesen Verpackungen 104 zählen beispielsweise Verpackungen in der lebensmittelverarbeitenden Industrie, die leer sind oder mit Produkt gefüllt sind und dieses derart umschließen, dass es von der Umgebung vollständig (insbesondere mit Hinblick auf einen etwaigen Austausch von Gasen oder Flüssigkeiten) abgetrennt ist. Fehlstellen oder Beschädigungen solcher Verpackungen können beispielsweise daraus resultieren, dass eine Siegelnaht einer mehrteiligen Verpackung, bestehend aus einer Verpackungsmulde und einer Deckfolie, nicht ordnungsgemäß erzeugt wurde, da beispielsweise Produkt in einen Bereich hineinragt, der beim Siegeln der Verpackung die Siegelnaht bilden soll. Durch das anwesende Produkt kann das Erzeugen der Siegelnaht erschwert oder zumindest teilweise gänzlich verhindert werden.

Produkte können alle denkbaren Produkte im Bereich der Lebensmittelindustrie sein, insbesondere Teig-, Käse-, oder Wurstwaren. Wenn im Folgenden auf Verpackungen oder Produkte Bezug genommen wird, ist damit stets beides, also sowohl Verpackungen als auch zusätzlich oder alternativ dazu Produkte gemeint.

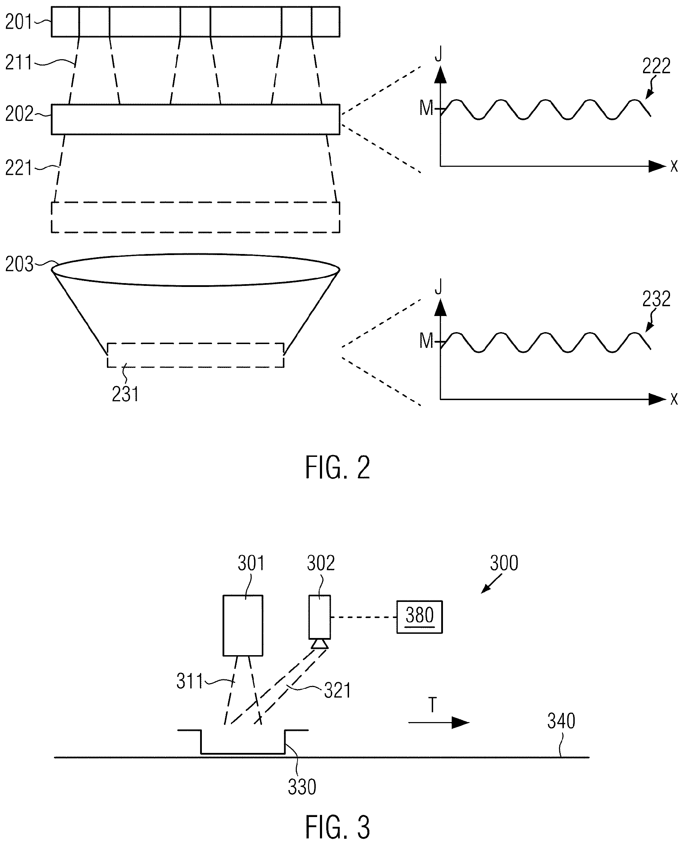

Um solche Fehlstellen in Verpackungen und/oder Produkten erkennen zu können, kann die erfindungsgemäße Beleuchtungseinrichtung 100 Infrarotlicht (und optional zusätzlich Licht anderer Wellenlängen) in Richtung einer Verpackung und/oder eines Produkts 104 emittieren und diese beispielsweise in Auflicht oder Durchlicht (wie in Bezug auf Figur 3 beschrieben) beleuchten, sodass durch eine geeignete Detektionseinrichtung, wie beispielsweise eine Kamera, das von der Verpackung und/oder dem Produkt transmittierte oder reflektierte Licht aufgenommen werden kann. Dieses kann dann verarbeitet werden (beispielsweise durch eine geeignete Steuereinheit, wie einen Computer mit zugeordnetem Prozessor und Speicher), um hieraus ein Inspektionsergebnis zu gewinnen, das indikativ für den Zustand der Verpackung und/oder des Produkts sein kann.

Die Beleuchtungseinrichtung 100 umfasst eine Vielzahl von gleichartigen Lichtquellen 111 bis 113. Die Erfindung ist hinsichtlich der Anzahl der Lichtquellen nicht beschränkt. Beispielsweise kann die Beleuchtungseinrichtung jedoch bis zu 50, bis zu 100 oder bis zu 200 gleichartige Lichtquellen umfassen. Die Lichtquellen können beispielsweise in einer Aufnahme oder in einem Rahmen 101 fest montiert sein. Die Lichtquellen 111 bis 113 sind hinsichtlich ihrer genauen Ausgestaltung erfindungsgemäß nicht beschränkt, sind jedoch so ausgebildet, dass sie Infrarotlicht emittieren können. Die Lichtquellen können beispielsweise eine Anzahl schmalbandiger Lichtquellen, wie beispielsweise Infrarotdioden, umfassen. Die Lichtquellen können jedoch auch breitbandige Lichtquellen, wie beispielsweise Halogenleuchten, umfassen. Die Lichtquellen sind erfindungsgemäß gleichartig, sodass sie zumindest in Bezug auf das von ihnen abgegebene Lichtspektrum identisch oder im Wesentlichen identisch (bis auf produktionsbedingte Unterschiede) ausgebildet sind, sodass über alle Lichtquellen hinweg im Wesentlichen dasselbe Licht emittiert wird.

Die gleichartigen Lichtquellen 111 bis 113 (im Folgenden auch kurz Lichtquellen genannt) können in einem eindimensionalen oder zweidimensionalen Muster angeordnet sein. Dazu kann die Aufnahme 101 ausgebildet sein, um beispielsweise Steckplätze für die einzelnen Lichtquellen oder zusammenhängende Gruppen von Lichtquellen bereitzustellen. Über diese Steckplätze kann auch beispielsweise ein Anschluss der Lichtquellen an eine Stromquelle und/oder Steuereinheit erfolgen.

Das eindimensionale Muster kann insbesondere eine gerade Linie (ohne Krümmung) oder eine gekrümmte oder nur abschnittsweise gerade Linie, beispielsweise in Form des Randes eines Kreises, des Randes einer Ellipse oder des Randes eines Rechtecks, insbesondere eines Quadrats, sein. Hierdurch kann Licht von den Lichtquellen in einem Muster emittiert werden, das Leerstellen (beispielsweise den Innenbereich eines Kreises) aufweist, die Bereichen der zu inspizierenden Verpackung entsprechen, die bei der Inspektion gegebenenfalls nicht zu berücksichtigen sind. Hierdurch wird die Erzeugung unbeabsichtigten Streulichts von Teilen der Verpackung, die nicht inspiziert werden sollen, vermieden.

Alternativ dazu kann auch vorgesehen sein, dass die Lichtquellen 111 bis 113 in einem zweidimensionalen Muster angeordnet sind. Ein solches zweidimensionales Muster kann beispielsweise ein Kreis, eine Ellipse, ein Quadrat, ein Rechteck oder ein Dreieck sein, wobei die Lichtquellen innerhalb dieser Fläche (also innerhalb des Kreises oder des Rechtecks) verteilt sind.

Unabhängig davon, ob die Lichtquellen 111 bis 113 in einem eindimensionalen oder zweidimensionalen Muster angeordnet sind, kann vorgesehen sein, dass benachbarte Lichtquellen entweder paarweise in gleichem Abstand zueinander angeordnet sind (sodass das jeweilige Muster ein regelmäßiges Muster ist) oder in unterschiedlichen Abständen zueinander angeordnet sind. Bei einem zweidimensionalen Muster kann ferner vorgesehen sein, dass der Abstand der Lichtquellen in einer ersten Richtung von dem Abstand der Lichtquellen in einer zweiten, zu der ersten Richtung senkrechten Richtung verschieden ist. Beispielsweise können die Lichtquellen entlang einer ersten Richtung in einem Abstand von 1cm angeordnet sein und in einer zweiten, dazu senkrechten Richtung in einem Abstand von 2cm angeordnet sein.

Die Lichtquellen 111 bis 113 sind bevorzugt so angeordnet, dass ihre Hauptemissionsrichtungen identisch bzw. parallel zueinander sind, sodass das Licht mit maximaler Intensität von benachbarten Lichtquellen in dieselbe Richtung ausgebracht wird.

Erfindungsgemäß umfasst die Beleuchtungseinrichtung weiterhin einen Diffusor 102, der in Emissionsrichtung der Lichtquellen angeordnet ist. Der Diffusor 102 ist so ausgebildet, dass er aus dem im Wesentlichen punktuellen Licht der Lichtquellen ein diffuses Lichtmuster erzeugt. Der Diffusor ist insbesondere so ausgebildet und angeordnet, dass aus dem aus den einzelnen Lichtquellen 111 bis 113 stammenden Licht ein überlappendes Lichtmuster gebildet wird. Das heißt also, dass in Emissionsrichtung nach dem Diffusor 102 in einer zur Emissionsrichtung senkrechten Ebene ein Lichtmuster entsteht, dessen Intensität zumindest in einem Bereich, der einer Projektion der Lichtquellen auf diese Ebene entspricht, an jedem Punkt von 0 verschieden ist. Hierdurch wird aus einer Vielzahl von lediglich punktförmigen Lichtquellen ein durchgehendes Lichtmuster erzeugt, das einen zu inspizierenden Teil einer Verpackung 104 möglichst vollständig ausleuchten kann.

Es kann vorgesehen sein, dass in Emissionsrichtung nach dem Diffusor 102 eine Fokussiereinrichtung 103, wie beispielsweise eine Linse, angeordnet ist, die das überlappende Lichtmuster 121 in ein fokussiertes Lichtmuster 131 umwandelt, das dann auf die Verpackung gerichtet werden kann. Hierdurch kann die Lichtintensität in dem Bereich der zu inspizierenden Verpackung erhöht werden.

Die Beleuchtungseinrichtung 100 kann weiterhin ein Anzeigeelement 180 umfassen. Dieses Anzeigeelement kann mit den Lichtquellen 111 bis 113 verbunden sein und eine für die Funktionsfähigkeit der Beleuchtungseinrichtung 100 insgesamt oder zumindest ein für die Funktionsfähigkeit der Lichtquellen indikatives Signal, insbesondere eine Anzeige in Form optisch wahrnehmbarer Informationen, ausgeben.

Beispielsweise kann das Anzeigeelement 130 als Bildschirm ausgeführt sein, auf dem für jede Lichtquelle oder eine zusammenhängende Gruppe von Lichtquellen (beispielsweise 10, 20 oder 50) eine Statusanzeige vorgesehen sein kann, wobei die Statusanzeige zumindest angibt, ob die jeweilige Lichtquelle (oder alle Lichtquellen der zusammenhängenden Gruppe) funktioniert. Alternativ kann auch vorgesehen sein, dass die Statusanzeige lediglich angibt, ob alle Lichtquellen funktionieren oder nicht. Anstelle eines Bildschirms kann auch vorgesehen sein, dass das Anzeigeelement lediglich eine Statusleuchte umfasst, die beispielsweise durch verschiedene Farben angibt, ob die Lichtquellen funktionsfähig sind. Auch hier kann entweder vorgesehen sein, dass eine Statusleuchte für alle Lichtquellen oder jeweils eine Statusleuchte für jeweils eine der Lichtquellen oder eine zusammenhängende Gruppe von Lichtquellen vorgesehen ist.

Um sicherzustellen, dass die Beleuchtungseinrichtung Licht mit möglichst gleichbleibender Qualität emittiert, kann die Beleuchtungseinrichtung 100 weiterhin eine Kühleinrichtung 120 umfassen. Die Kühleinrichtung kann zumindest mit den Lichtquellen 111 bis 113 und/oder mit dem Diffusor 102 und/oder, sofern vorgesehen, mit der Fokussiereinrichtung 103 verbunden sein und diese passiv oder aktiv kühlen. Beispielsweise kann die Kühleinrichtung 120 einen Wasserkühlkreislauf umfassen, der an das jeweilige Element der Beleuchtungseinrichtung über einen Wärmetauscher gekoppelt ist und so Wärme von dem jeweiligen Element abführen kann. Sind die Lichtquellen 111 bis 113 in einem Rahmen oder einer entsprechenden Aufnahme 101 angeordnet, kann vorgesehen sein, dass diese aus thermisch gut leitendem Material besteht, sodass Wärme von den Lichtquellen zuverlässig an die Kühleinrichtung 120 abtransportiert werden kann, ohne eine dezidierte Verbindung der Kühleinrichtung mit jeder der Lichtquellen vorsehen zu müssen. Beispielsweise kann der Rahmen aus Edelstahl oder Aluminium bestehen, was thermisch gut leitfähig ist.

Insbesondere bei Verwendung breitbandiger Lichtquellen kann vorgesehen sein, dass das Inspizieren der Verpackungen nur mit einem Teil des gesamten von den Lichtquellen emittierten Spektrums (insbesondere dem infraroten Anteil oder einem Teil des infraroten Lichts) durchgeführt wird. In einer solchen Ausführungsform kann vorgesehen sein, dass die Beleuchtungseinrichtung weiterhin einen Spektralfilter 110 umfasst, der das von den Lichtquellen emittierte Licht filtert, sodass nur bestimmte Wellenlängenbereiche diesen Spektralfilter passieren. Es kann vorgesehen sein, dass auch der Spektralfilter mit der Kühleinrichtung 120 (siehe oben) verbunden ist, da dieser durch Absorption eines Teils des von den Lichtquellen emittierten Lichtes Energie aufnimmt, die in Wärmeenergie im Spektralfilter umgesetzt werden kann.

Der Spektralfilter ist hinsichtlich seiner Anordnung in Emissionsrichtung des von den Lichtquellen emittierten Lichtes nicht beschränkt. Es kann vorgesehen sein, dass er, wie in Figur 1 dargestellt, zwischen den Lichtquellen und dem Diffusor angeordnet ist. Alternativ kann auch vorgesehen sein, dass der Spektralfilter 110 in Emissionsrichtung nach dem Diffusor 102 und vor der Fokussiereinrichtung 103 oder in Emissionsrichtung nach der Fokussiereinrichtung angeordnet ist. In einer Ausführungsform kann auch vorgesehen sein, dass der Diffusor 102 als Spektralfilter fungiert und für Licht bestimmter Wellenlängen undurchlässig ist. Dies trägt zu einer Kompaktifizierung der Beleuchtungseinrichtung bei und kann insbesondere beim Vorsehen einer Kühleinrichtung die Anzahl von Verbindungen mit der Kühleinrichtung reduzieren. In einer solchen Ausführungsform kann der Diffusor beispielsweise eine Beschichtung auf der den Lichtquellen zugewandten oder abgewandten Seite umfassen, die als Spektralfilter wirkt. Alternativ kann auch der Diffusor insgesamt aus einem Material bestehen, das als Spektralfilter wirkt.

Figur 2 zeigt erneut eine schematische Ansicht der Beleuchtungseinrichtung. In dieser Ansicht sind lediglich die Anordnung der Lichtquellen 201 (schematisch in einer Seitenansicht) sowie deren emittiertes Licht 211, der Diffusor 202 sowie das von ihm abgegebene Lichtmuster 221 und die Fokussiereinrichtung 203 mit dem von der Fokussiereinrichtung abgegebenen fokussierten Lichtmuster 231 dargestellt.

Der Diffusor 202 ist so angeordnet, dass er ein überlappendes Lichtmuster 221 aus dem von den Lichtquellen emittierten Licht 211 erzeugt. Das von den Lichtquellen emittierte Licht muss bei Auftreffen auf den Diffusor noch nicht zusammenhängend sein (also Lichtkegel benachbarter Lichtquellen müssen an dieser Stelle nicht überlappen), sodass der Diffusor auch nur punktuell oder bereichsweise beleuchtet werden kann, entsprechend einem Lichtkegel, der von der jeweiligen Lichtquelle emittiert wird. Der Diffusor ist so ausgestaltet, dass er daraus ein überlappendes Lichtmuster 221 erzeugt. Entsprechende Materialien, die eingestrahltes, gerichtetes Licht in diffuses Licht umwandeln können, sind aus dem Stand der Technik grundsätzlich bekannt.

Das überlappende Lichtmuster besitzt in einer besonders bevorzugten Ausführungsform eine Intensitätsverteilung, die in der Figur 2 dargestellt ist und um einen Mittelwert M schwankt. Die Intensitätsverteilung ist hier entlang lediglich einer Dimension x gezeigt, kann jedoch insbesondere bei einem zweidimensionalen Lichtmuster auch entsprechend in einer Ebene vorliegen. Über die Ausdehnung des Diffusors 202 entlang der Richtung x (eine beliebig gewählte Richtung entlang des Diffusors) ist die Intensitätsverteilung 222, die von dem überlappenden Lichtmuster 221 erzeugt wird, bevorzugt so, dass an jedem Punkt in dem überlappenden Lichtmuster die Intensität von einem Mittelwert M der Intensität um höchstens 20% oder um höchstens 10% oder bevorzugt um höchstens 5% abweicht. Innerhalb des überlappenden Lichtmusters ist die Lichtintensität also im Wesentlichen konstant, obwohl sie aus einer Reihe diskreter Lichtquellen erzeugt wurde. Hierdurch wird für das Inspizieren von Verpackungen ein möglichst konstantes Lichtmuster erzeugt, was das Inspektionsergebnis durch möglichst gleichmäßiges Ausleuchten des zu inspizierenden Bereichs einer Verpackung verbessern kann.

Das von der Fokussiereinrichtung 203 emittierte, fokussierte Lichtmuster 231 kann entsprechend der Darstellung in Figur 2 eine Intensitätsverteilung 232 aufweisen, die im Wesentlichen der Intensitätsverteilung 222 des überlappenden Lichtmusters 221 nach dem Diffusor 202 entspricht, jedoch aufgrund der Fokussierung entlang der Richtung x auf kleinerer Fläche bzw. Ausdehnung abgebildet wird.

Figur 3 zeigt eine Ausführungsform einer Inspektionseinrichtung 300, die eine Beleuchtungseinrichtung 301 entsprechend der vorangegangenen beschriebenen Ausführungsformen umfassen kann. Die Beleuchtungseinrichtung emittiert das überlappende (gegebenenfalls fokussierte) Lichtmuster 311 in Richtung einer Verpackung, die von einer Platzierungseinrichtung 340 so positioniert wurde, dass die Verpackung 330 von dem Lichtmuster 311 zumindest in einem zu inspizierenden Teil beleuchtet wird.

Die Beleuchtungseinrichtung 301 ist in dieser Ausführungsform so angeordnet, dass sie die Verpackung 330 in Auflicht beleuchtet. Es kann jedoch auch vorgesehen sein, dass die Beleuchtungseinrichtung unterhalb der Platzierungseinrichtung 340 angeordnet ist, sodass die Verpackung 330 im Durchlicht durch die Beleuchtungseinrichtung beleuchtet wird. In einer solchen Ausführungsform ist die Platzierungseinrichtung zumindest in dem Bereich, in dem die Verpackung 330 beleuchtet werden soll, für das Infrarotlicht oder allgemeiner das für die Inspektion der Verpackung 330 zu verwendende Licht von der Beleuchtungseinrichtung 301 transparent.

Die Inspektionseinrichtung 300 umfasst weiterhin eine Detektionseinrichtung 302, die das von der Verpackung 330 reflektierte (bei Anordnung der Beleuchtungseinrichtung 301 im Auflicht) oder transmittierte (bei Anordnung der Beleuchtungseinrichtung für die Beleuchtung der Verpackung in Durchlicht) Licht 321 detektieren kann. Die Detektionseinrichtung kann als Infrarotdetektionseinrichtung, wie beispielsweise als Infrarotzeilenkamera, ausgeführt sein oder allgemein als Detektionseinrichtung ausgebildet sein, die zumindest Infrarotlicht detektieren kann. Zusätzlich zu einer solchen, das Infrarotlicht detektierenden Einrichtung kann auch eine Detektionseinrichtung vorgesehen sein, die Licht in einem anderen Wellenlängenbereich (beispielsweise dem sichtbaren Bereich) detektieren kann oder die Detektionseinrichtung 302 kann so ausgebildet sein, dass sie infrarotes Licht und Licht eines anderen Wellenlängenbereichs (beispielsweise sichtbares Licht) detektieren kann. Hierdurch kann ein Inspizieren der Verpackungen sowohl im Infrarotlicht als auch optional im sichtbaren Bereich des Lichts erfolgen.

Die Detektionseinrichtung empfängt das von der Verpackung reflektierte oder emittierte Infrarotlicht und überträgt das aufgenommene Bild an eine Auswerteinrichtung 380. Die Auswerteinrichtung kann beispielsweise die Steuereinheit der Inspektionseinrichtung sein oder ein Teil dieser und kann insbesondere als Computer umfassend einen Prozessor und zugehörigen Speicher zum Ausführen von Programmcode ausgebildet sein. Die Auswerteinrichtung 380 kann ausgebildet sein, basierend auf dem von der Detektionseinrichtung empfangenen Detektionsergebnis (beispielsweise eine Infrarotaufnahme der zu inspizierenden Verpackung 330) ein Inspektionsergebnis zu generieren. Dies kann beispielsweise umfassen, dass die Auswerteinrichtung das erlangte Detektionsergebnis durch Bildvergleich mit einem keine Fehlstellen aufweisenden Bild einer Verpackung vergleicht und bei Abweichungen von diesem eine Information ausgibt (beispielsweise an ein Display oder ähnliche Anzeigeeinrichtungen), dass eine Fehlstelle vorliegt und gegebenenfalls zusätzliche Informationen dahingehend ausgibt, wo die Fehlstelle in der Verpackung positioniert ist.

Dabei kann vorgesehen sein, dass die Verpackung durch die Platzierungseinrichtung 340 im Bereich der Beleuchtungseinrichtung stillstehend positioniert wird. Das heißt also, dass bei Inspektion der Verpackung 330 diese relativ zu der Beleuchtungseinrichtung und der Detektionseinrichtung stillsteht. Alternativ kann jedoch auch vorgesehen sein, dass die Platzierungseinrichtung 340 als Transporteinrichtung (etwa als Transportband) ausgebildet ist oder diese umfasst, und Verpackungen 330 entlang einer Transportrichtung T an der Beleuchtungseinrichtung und der Detektionseinrichtung vorbei bewegen kann.

Dabei kann vorteilhaft vorgesehen sein, dass ein Beleuchten und Inspizieren der Verpackung 330 während des Transports in Transportrichtung T erfolgt, sodass bevorzugt ein kontinuierlicher Transport der Verpackungen stattfindet und diese dabei inspiziert werden. Hiermit kann der Durchsatz der Inspektionseinrichtungen erhöht werden.

Alternativ kann auch vorgesehen sein, dass der Transport der Verpackungen taktweise erfolgt und eine zu inspizierende Verpackung zunächst zu der Beleuchtungseinrichtung transportiert wird, dann der Transport unterbrochen wird, während das Inspizieren der Verpackung (und entsprechend auch das Beleuchten der Verpackung) erfolgt, und anschließend kann ein Weitertransport der Verpackungen erfolgen. Dabei kann der Weitertransport abhängig von dem Inspektionsergebnis sein und beispielsweise auch umfassen, dass eine defekte Verpackung basierend auf dem Inspektionsergebnis ausgeschleust wird.

## Patentansprüche

1. Beleuchtungseinrichtung (100) für eine Inspektionsmaschine (300) zum Inspizieren von Verpackungen und/oder Produkten (104), die Beleuchtungseinrichtung (100) umfassend eine Vielzahl gleichartiger Lichtquellen (111-113) zum Emittieren von Infrarotlicht in eine Emissionsrichtung und einen Diffusor (102) zum Erzeugen eines überlappenden Lichtmusters (221) aus dem emittierten Infrarotlicht (211), das auf eine zu inspizierende Verpackung und/oder ein zu inspizierendes Produkt gerichtet werden kann.

2. Beleuchtungseinrichtung (100) nach Anspruch 1, weiterhin umfassend eine in Emissionsrichtung nach dem Diffusor (102) angeordnete Fokussiereinrichtung (103) zum Erzeugen von fokussiertem Infrarotlicht (231), das auf eine zu inspizierende Verpackung und/oder ein zu inspizierendes Produkt (104) gerichtet werden kann.

3. Beleuchtungseinrichtung (100) nach Anspruch 1 oder 2, wobei die Lichtquellen (111-113) in einem eindimensionalen oder zweidimensionalen Muster angeordnet sind.

4. Beleuchtungseinrichtung (100) nach Anspruch 3, wobei das eindimensionale Muster oder das zweidimensionale Muster ein regelmäßiges Muster ist.

5. Beleuchtungseinrichtung (100) nach einem der Ansprüche 1 bis 4, wobei die Lichtquellen (111-113) Breitbandlichtquellen oder Schmalbandlichtquellen sind.

6. Beleuchtungseinrichtung (100) nach einem der Ansprüche 1 bis 5, wobei die Beleuchtungseinrichtung (100) einen für Infrarotlicht wenigstens einer Wellenlänge transparenten Spektralfilter (110) in Emissionsrichtung umfasst oder wobei der Diffusor (102) ein für Infrarotlicht wenigstens einer Wellenlänge transparenter Diffusor ist.

7. Beleuchtungseinrichtung (100) nach einem der Ansprüche 1 bis 6, wobei die Beleuchtungseinrichtung (100) ein Anzeigeelement (180) zum Anzeigen eines Betriebszustands der Beleuchtungseinrichtung (100) umfasst.

8. Beleuchtungseinrichtung (100) nach einem der Ansprüche 1 bis 7, wobei die Beleuchtungseinrichtung eine Kühleinrichtung (120) zum Kühlen von wenigstens einem von den Lichtquellen (111-113), dem Diffusor (102), der Fokussiereinrichtung (103) umfasst.

9. Beleuchtungseinrichtung (100) nach einem der Ansprüche 1 bis 8, wobei die Lichtquellen (111-113) ausgebildet sind, Infrarotlicht in einem Wellenlängenbereich zu emittieren und wobei der Diffusor (102) für Infrarotlicht in wenigstens dem Wellenlängenbereich transparent sind.

10. Inspektionseinrichtung (300) zum Inspizieren von Verpackungen und/oder Produkten (330), die Inspektionseinrichtung umfassend eine Beleuchtungseinrichtung (301) nach einem der Ansprüche 1 bis 9, eine Platzierungseinrichtung (340) zum Platzieren einer zu inspizierenden Verpackung und/oder eines zu inspizierenden Produkts, eine Detektionseinrichtung (302) zum Detektieren wenigstens eines Teils der Verpackung und/oder des Produkts in Durchlicht oder Auflicht des von der Beleuchtungseinrichtung (301) emittierten Lichts, und eine Auswerteinrichtung (380) zum Auswerten des eines von der Detektionseinrichtung (302) erlangten Detektionsergebnisses.

11. Inspektionseinrichtung (300) nach Anspruch 10, wobei die Beleuchtungseinrichtung (301) weiterhin eine Fokussiereinrichtung (103) in Emissionsrichtung nach dem Diffusor (102) umfasst und wobei optional die Platzierungseinrichtung (340) so relativ zu der Beleuchtungseinrichtung angeordnet ist, dass zumindest der Teil der platzierten Verpackung und/oder des platzierten Produkts im Fokus der Fokussiereinrichtung (103) platziert ist.

12. Inspektionseinrichtung (300) nach Anspruch 10 oder 11, wobei die Detektionseinrichtung (302) eine Infrarotdetektionseinrichtung umfasst, insbesondere eine Infrarot-Zeilenkamera.

13. Inspektionseinrichtung (300) nach einem der Ansprüche 10 bis 12, wobei die Platzierungseinrichtung (340) eine Transporteinrichtung zum Transportieren einer zu inspizierenden Verpackung und/oder eines zu inspizierenden Produkts (330) umfasst.

14. Verfahren zum Inspizieren von Verpackungen und/oder Produkten (330) mittels einer **In**spektionseinrichtung (300), die Inspektionseinrichtung umfassend eine Beleuchtungseinrichtung (301) nach einem der Ansprüche 1 bis 9, eine Platzierungseinrichtung (340) zum Platzieren einer zu inspizierenden Verpackung und/oder eines zu inspizierenden Produkts, eine Detektionseinrichtung (302) zum Detektieren wenigstens eines Teils der Verpackung und/oder des Produkts in Durchlicht oder Auflicht des von der Beleuchtungseinrichtung (301) emittierten Lichts, und eine Auswerteinrichtung (380) zum Auswerten des eines von der Detektionseinrichtung (302) erlangten Detektionsergebnisses, wobei das Verfahren ein Platzieren einer zu inspizierenden Verpackung und/oder eines zu inspizierenden Produkts (330), ein Beleuchten der zu inspizierenden Verpackung und/oder des zu inspizierenden Produkts mittels der Beleuchtungseinrichtung (301), ein Detektieren zumindest eines Teils der Verpackung und/oder des Produkts und ein Auswerten des von der Detektionseinrichtung (302) erlangten Detektionsergebnisses mittels der Auswerteinrichtung (380) umfasst.

15. Verfahren nach Anspruch 14, wobei die die Platzierungseinrichtung eine Transporteinrichtung zum Transportieren einer zu inspizierenden Verpackung und/oder eines zu inspizierenden Produkts umfasst und wobei das Verfahren ein Platzieren der Verpackung und/oder des Produkts mittels der Transporteinrichtung umfasst, wobei optional das Verfahren ein Detektieren des wenigstens einen Teils der Verpackung und/oder des Produkts während des Transports der Verpackung und/oder des Produkts mittels der Transporteinrichtung umfasst.
